# FASCICULE DE BREVET EUROPEEN

(11) **EP 3 548 357 B1**
(45) Date de publication et mention de la délivrance du brevet: **27.04.2022**
(21) Numéro de dépôt: 17822366.5
(22) Date de dépôt: 01.12.2017
(51) Int. Cl.: B61L 5/10

(54) **MECANISME DE DEPLACEMENT ET BLOCAGE EN POSITION D'AU MOINS UNE AIGUILLE DE RAIL**
MECHANISMUS ZUM BEWEGEN UND VERRIEGELN IN POSITION VON MINDESTENS EINEM PUNKTSCHALTER
MECHANISM FOR MOVING AND LOCKING IN POSITION AT LEAST ONE POINT SWITCH

(30) Priorité: 01.12.2016 FR 1661825
(43) Date de publication de la demande: 09.10.2019
(73) Titulaire: Vossloh Cogifer, 92500 Rueil-Malmaison (FR)
(72) Inventeur: BARRESI, Francesco, 67000 Strasbourg (FR); VOGLER, Thomas, 67270 Bossendorf (FR)
(74) Mandataire: Cabinet Nuss
(86) Numéro de dépôt international: PCT/FR2017/053340
(87) Numéro de publication internationale: WO 2018/100320

(56) Documents cités:
- EP-A1- 1 245 469
- WO-A1-02/49902
- WO-A1-99/30951
- WO-A1-2005/049402
- WO-A1-2006/125716
- FR-A1- 3 003 531

## Description

La présente invention se rapporte au domaine des dispositifs de manœuvre d'aiguilles élastiques de rail ou de pointe mobile dans un appareil de voie et plus particulièrement au domaine des mécanismes d'actionnement d'aiguillage ou cœur à pointe mobile.

Il est connu de l'art antérieur des systèmes motorisés pour effectuer une manœuvre des aiguilles qui forment un aiguillage en opérant latéralement leur translation. Il est courant que l'opération de manœuvre de l'aiguillage fasse intervenir un chariot qui participe également au blocage de la translation par l'intermédiaire de taquets lorsque les aiguilles sont dans des positions parfaitement définies. Aussi, un déblocage de ces aiguilles préalablement à leur translation est indispensable. Pour opérer un tel déblocage, une solution illustrée notamment par le système proposé dans la publication FR 3003531 consiste à une utiliser un même élément pour actionner conjointement le déblocage de l'aiguille et sa translation.

La présente invention a pour objet de proposer un mécanisme d'actionnement permettant de réaliser, d'une part, un déplacement des aiguilles ou pointe mobile et, d'autre part, un verrouillage des aiguilles ou de la pointe mobile grâce à un unique dispositif d'actionnement.

Par ailleurs, la présente invention permet également de réaliser un calage de la tringlerie d'actionnement des aiguilles ou de la pointe mobile lorsqu'un dispositif de verrouillage des aiguilles ou de la pointe mobile est déjà présent. Lorsque le dispositif de verrouillage est sensible aux vibrations, ce dispositif se trouve alors renforcé par le mécanisme d'actionnement de l'invention.

Il convient de noter que dans le présent document, le terme *« aiguille* » se rapporte également à toute pointe mobile de type connu.

Il est rappelé qu'il y a deux aiguilles déplacées dans un aiguillage et une pointe mobile unique dans un croisement.

L'invention sera mieux comprise, grâce à la description ci-après, qui se rapporte à au moins un mode de réalisation préféré, donné à titre d'exemple non limitatif, et expliqué avec référence aux dessins schématiques annexés dans lesquels :
- la figure 1 correspond à une représentation schématique d'un exemple de mécanisme de déplacement et de blocage en position d'aiguilles de rail selon l'invention,
- la figure Ibis correspond à une représentation schématique dégagée d'une variante de l'exemple de mécanisme de déplacement et de blocage en position d'aiguilles de rail de la figure 1 lorsque les aiguilles sont en position décalée vers la droite,

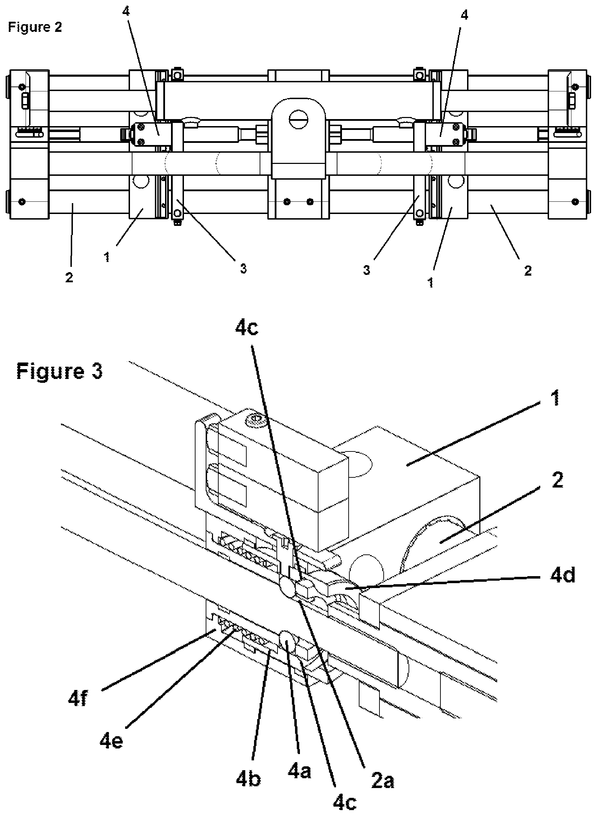

- la figure 2 correspond à une représentation schématique en vue de dessus de l'exemple de mécanisme de déplacement et de blocage en position d'aiguilles de rail de la figure 1,
- la figure 3 correspond à une représentation schématique de la section d'un exemple de dispositif de blocage formé par un système de calage à billes le long de l'axe de déplacement du mécanisme de l'invention,

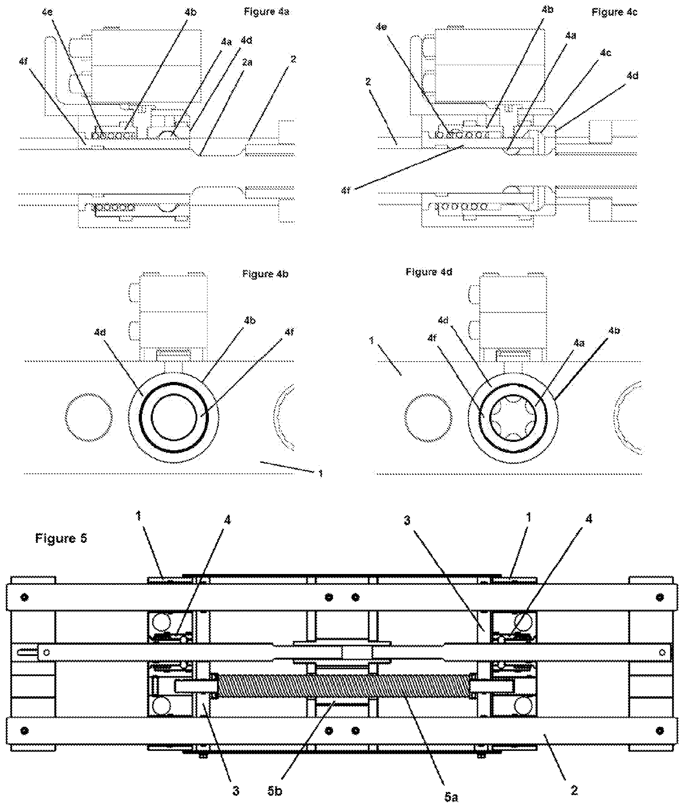

- les figures 4a et 4c correspondent à des représentations schématiques de vues en section d'un exemple de dispositif de blocage dans le plan de l'axe de déplacement du mécanisme de l'invention dans des positions respectivement verrouillée et déverrouillée,
- les figures 4b et 4d correspondent à des représentations schématiques de vues en section d'un exemple de dispositif de blocage dans un plan perpendiculaire à l'axe de déplacement du mécanisme de l'invention dans des positions respectivement verrouillée et déverrouillée,
- la figure 5 correspond à une représentation schématique de l'exemple de mécanisme de déplacement et de blocage en position d'aiguilles de rail de la figure 1 selon une vue en section dans le plan du mécanisme,
- la figure 6a correspond à une représentation schématique de l'exemple de mécanisme de déplacement et de blocage en position d'aiguilles de rail de la figure 1 selon une vue en section dans le plan du mécanisme lorsque les aiguilles de rail sont calées sur la gauche par le mécanisme de l'invention,
- la figure 6b correspond à une représentation schématique de l'exemple de mécanisme de déplacement et de blocage en position d'aiguilles de rail de la figure 1 selon une vue en section dans le plan du mécanisme lors du 1^{er} mouvement expliqué dans la demande,
- la figure 6c correspond à une représentation schématique de l'exemple de mécanisme de déplacement et de blocage en position d'aiguilles de rail de la figure 1 selon une vue en section dans le plan du mécanisme lors du 2^{nd} mouvement expliqué dans la demande,
- la figure 6d correspond à une représentation schématique de l'exemple de mécanisme de déplacement et de blocage en position d'aiguilles de rail de la figure 1 selon une vue en section dans le plan du mécanisme lors du 3^{ème} mouvement expliqué dans la demande,

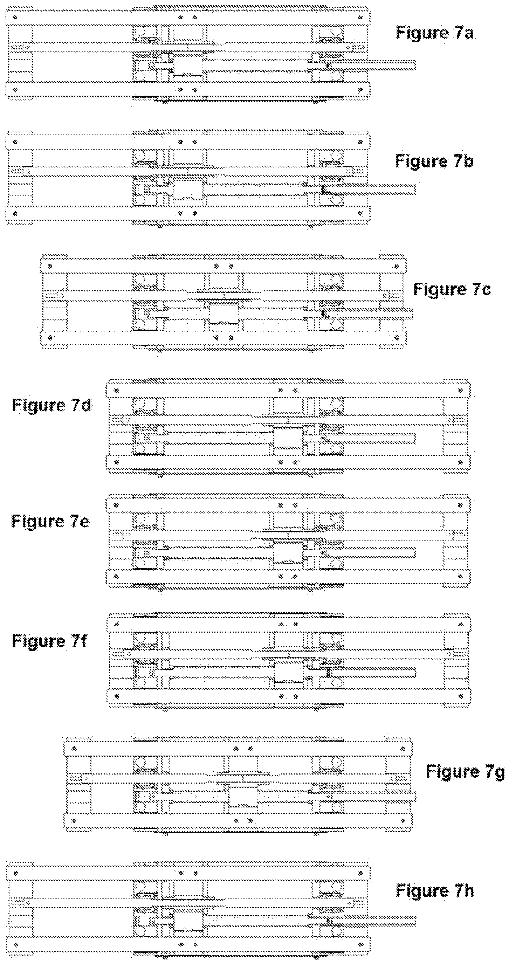

- les figures 7a à 7h illustrent une cinématique du fonctionnement du mécanisme à partir de la position correspondant à la figure 6a prise comme position initiale,

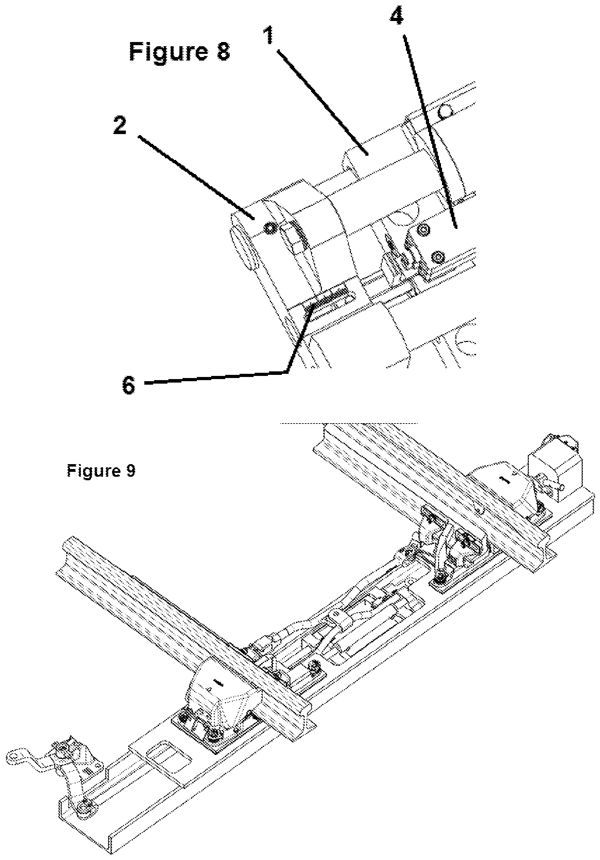

- la figure 8 correspond à une représentation schématique d'une graduation présentée sur l'élément mobile d'un mécanisme de l'invention,
- la figure 9 correspond à une représentation schématique d'un exemple de mécanisme de déplacement et de blocage en position d'aiguilles de rail de l'invention monté sur une traverse creuse et associé à une paire de rails correspondant sensiblement à l'exemple de la figure 1,
- la figure 10 correspond à une représentation schématique éclatée de l'exemple de mécanisme de déplacement et de blocage de l'invention selon l'exemple de la figure 1 par rapport à une traverse creuse et une paire de rail associées,
- la figure 11 correspond à une représentation schématique vue de dessus de l'exemple de mécanisme de déplacement et de blocage selon l'invention de la figure 9,
- la figure 12 correspond à une représentation schématique d'un second exemple de mécanisme de déplacement et de blocage en position d'aiguilles de rail selon l'invention,
- la figure 13 correspond à une représentation schématique en vue de dessus de l'exemple de mécanisme de déplacement et de blocage en position d'aiguilles de rail de la figure 12,
- la figure 14 correspond à une représentation schématique de l'exemple de mécanisme de déplacement et de blocage en position d'aiguilles de rail de la figure 12 selon une vue en section dans le plan du mécanisme,
- la figure 15a correspond à une représentation schématique de l'exemple de mécanisme de déplacement et de blocage en position d'aiguilles de rail de la figure 12 selon une vue en section dans le plan du mécanisme lorsque les aiguilles de rail sont calées sur la gauche par le mécanisme de l'invention,
- la figure 15b correspond à une représentation schématique de l'exemple de mécanisme de déplacement et de blocage en position d'aiguilles de rail de la figure 12 selon une vue en section dans le plan du mécanisme lors du 1^{er} mouvement expliqué dans la demande,
- la figure 15c correspond à une représentation schématique de l'exemple de mécanisme de déplacement et de blocage en position d'aiguilles de rail de la figure 12 selon une vue en section dans le plan du mécanisme lors du 2^{nd} mouvement expliqué dans la demande,
- la figure 15d correspond à une représentation schématique de l'exemple de mécanisme de déplacement et de blocage en position d'aiguilles de rail de la figure 12 selon une vue en section dans le plan du mécanisme lors du 3^{ème} mouvement expliqué dans la demande,
- les figures 16a à 16h illustrent une cinématique du fonctionnement du mécanisme à partir de la position correspondant à la figure 15a prise comme position initiale.

L'invention se rapporte à un mécanisme de déplacement et de blocage en position d'au moins une aiguille de rail, caractérisé en ce que le mécanisme comprend au moins :
- un élément fixe en position 1 avec au moins une contre-aiguille de rail,
- un élément mobile 2 en translation monté fixe avec au moins une aiguille de rail et apte à translater grâce à un dispositif 5 d'actionnement,
- un dispositif de blocage 4 de l'élément mobile 2 avec l'élément fixe 1 lorsque l'élément mobile 2 est dans une position de fin de course par rapport à l'élément fixe 1, de sorte que l'aiguille de rail de l'élément mobile 2 en translation est en butée contre sa contre-aiguille de rail,
- un élément de déverrouillage 3 du dispositif de blocage 4, cet élément de déverrouillage 3 étant mobile et apte à être déplacé grâce à un dispositif 5 d'actionnement lorsque l'élément mobile 2 est verrouillé immobile avec l'élément fixe 1.

Selon une particularité préférée de réalisation du mécanisme de déplacement et de blocage en position de l'invention, l'élément de déverrouillage 3 et l'élément mobile 2 en translation partage un même dispositif d'actionnement 5.

Selon une spécificité de mise en œuvre de cette particularité du mécanisme, le dispositif d'actionnement 5 actionne alternativement en translation l'élément de déverrouillage 3 et l'élément mobile 2.

Selon une autre particularité de réalisation du mécanisme de déplacement et de blocage en position de l'invention, l'élément de déverrouillage 3 est apte à être déplacé en translation selon un axe parallèle à l'axe de translation de l'élément mobile 2 en translation.

Selon une autre particularité de construction du mécanisme de déplacement et de blocage en position de l'invention, le dispositif 5 d'actionnement est un actionneur de type linéaire. Cet actionneur de type linéaire peut être manuel ou motorisé, par exemple pneumatique, hydraulique ou mécanique.

Selon une spécificité de construction du dispositif 5 d'actionnement lorsque celui-ci est de type linéaire, le dispositif 5 d'actionnement comprend au moins :
- un axe fileté 5a fixe en translation avec un premier des deux éléments que sont l'élément de déverrouillage 3 et de l'élément mobile 2 en translation,
- un écrou taraudé 5b coopérant avec l'axe fileté 5a fixe en translation avec un second des deux éléments que sont l'élément de déverrouillage 3 et de l'élément mobile 2 en translation,
- un mécanisme d'entraînement en rotation axiale de l'axe fileté 5a ou de l'écrou taraudé 5b, la pièce qui n'est pas actionnée par le moyen moteur étant fixe en rotation avec l'élément de déverrouillage 3 ou l'élément mobile 2 en translation qui la porte.

Selon une autre particularité de construction du mécanisme de déplacement et de blocage en position de l'invention, le dispositif de blocage 4 de l'élément mobile 2 avec l'élément fixe 1 est monté sur l'élément fixe 1.

Selon une autre particularité de construction du mécanisme de déplacement et de blocage en position de l'invention, l'élément de déverrouillage 3 interagit avec le dispositif de blocage 4 en étant déplacé en butée contre une surface de l'élément fixe 1.

Selon une particularité préférée de construction du mécanisme de déplacement et de blocage en position de l'invention, le mécanisme de déplacement et de blocage en position selon l'invention est caractérisé en ce que :
- l'élément mobile 2 en translation est monté fixe avec deux aiguilles de rail et comprend une position de fin de course pour chaque aiguille par rapport à une contre-aiguille respective associée à au moins un élément fixe 1,
- les contre-aiguilles sont associées à des éléments fixes respectifs ou un élément fixe 1 partagé,
- chaque position de fin de course de l'élément mobile 2 en translation est associée à un dispositif de blocage 4 respectif de l'élément mobile 2 avec un élément fixe 1,
- l'élément de déverrouillage 3 est apte à interagir alternativement avec le dispositif de blocage 4 de chaque position de fin de course de l'élément mobile 2 en translation.

Selon une autre particularité de construction du mécanisme de déplacement et de blocage en position de l'invention, l'élément mobile 2 en translation étant monté coulissant au travers de l'élément fixe 1, le dispositif de blocage 4 est réalisé par un dispositif de calage à billes coopérant avec une gorge 2a portée par l'élément mobile 2 en translation, le dispositif de calage à billes comprenant :
- au moins une bille 4a apte à réaliser un déplacement radial par rapport à l'axe de translation de l'élément mobile 2 de façon à coopérer avec au moins une gorge 2a de l'élément mobile 2,
- une bague 4b montée mobile en coulissement selon l'axe de translation de l'élément mobile 2 et comportant, d'une part, au moins une rampe 4c de déplacement d'au moins une bille 4a vers une gorge 2a de l'élément mobile 2 en translation et, d'autre part, une interface d'interaction 4d avec un élément de déverrouillage 3,
- un ressort 4e de rappel de la bague mobile 4b s'opposant à l'action d'un élément de déverrouillage 3 pour forcer le positionnement d'au moins une bille 4a dans la gorge 2a de l'élément mobile 2.

Le ressort 4e de rappel de la bague mobile 4a permet également d'empêcher un déplacement de la bague mobile 4a sous l'action d'un élément de déverrouillage 3 en cas de vibrations et en absence de fonctionnement du dispositif 5 d'actionnement.

Selon une spécificité de construction de la bague 4b montée mobile, l'interface d'interaction 4d de la bague 4b montée mobile fait saillie par rapport à une surface de l'élément fixe 1.

L'invention porte aussi sur un procédé de fonctionnement d'un mécanisme de déplacement et de blocage selon l'invention, caractérisé en ce que l'élément de déverrouillage 3 et l'élément mobile 2 en translation partageant un même dispositif 5 d'actionnement, le déplacement par le dispositif 5 d'un premier de ces deux éléments 2, 3 est conditionné par l'immobilité du second de ces éléments 2, 3, avec une immobilité soit en position de butée contre l'élément fixe 1 soit en position verrouillée avec l'élément fixe 1 sous l'action du dispositif de blocage 4.

Ainsi, le procédé mis en œuvre par le dispositif d'actionnement 5 fait fonctionner alternativement les translations respectives de l'élément de déverrouillage 3 et de l'élément mobile 2.

Selon une particularité du procédé de fonctionnement selon l'invention, le procédé comprend :
- une étape de déplacement d'une aiguille contre sa contre-aiguille par translation de l'élément mobile 2 en translation selon une première direction, sous l'action du dispositif 5 d'actionnement jusqu'à une position de fin de course,
- une étape de verrouillage de l'élément mobile 2 avec l'élément fixe 1 par le dispositif de blocage 4,
- une étape de déplacement de l'élément de déverrouillage 3 sous l'action du dispositif 5 d'actionnement, l'élément mobile 2 en translation étant fixe avec l'élément fixe 1,
- une étape de butée de l'élément de déverrouillage 3 avec une surface de l'élément mobile 2 fixe conjointement à une étape de déverrouillage de l'élément mobile 2,
- une étape de déplacement d'une aiguille contre sa contre-aiguille par translation de l'élément mobile 2 en translation selon une seconde direction, sous l'action du dispositif 5 d'actionnement, cette seconde direction étant opposée à la première direction, l'élément de déverrouillage 3 restant fixe en butée contre l'élément fixe 1.

Deux exemples particuliers de construction de l'invention sont détaillés ci-après en référence aux différentes figures et schémas proposés à titre d'illustration.

Le mécanisme est principalement constitué de trois sous-ensembles :
- un élément fixe en position 1 qui est fixe par rapport à la voie (fixé à la traverse par exemple)
- un élément mobile 2 qui peut être un charriot mobile lié à la tringle de déplacement d'une paire d'aiguilles de rail élastiques d'un appareil de voie, mais qui peut également être connecté à :
   o un dispositif de verrouillage/déverrouillage de l'aiguille avec sa contre-aiguille, par exemple de type Verrou Carter Coussinet
   o un mécanisme de tringlerie de renvoi.
- un élément de déverrouillage 3 qui peut être un charriot mobile, indépendant de l'élément mobile 2.

L'élément mobile 2 et l'élément de déverrouillage 3 sont en liaison glissière avec l'élément fixe 1.

On utilise par exemple un guidage linéaire commun à l'élément mobile 2 et à l'élément de déverrouillage 3 pour assurer des liaisons cinématiques parallèles.

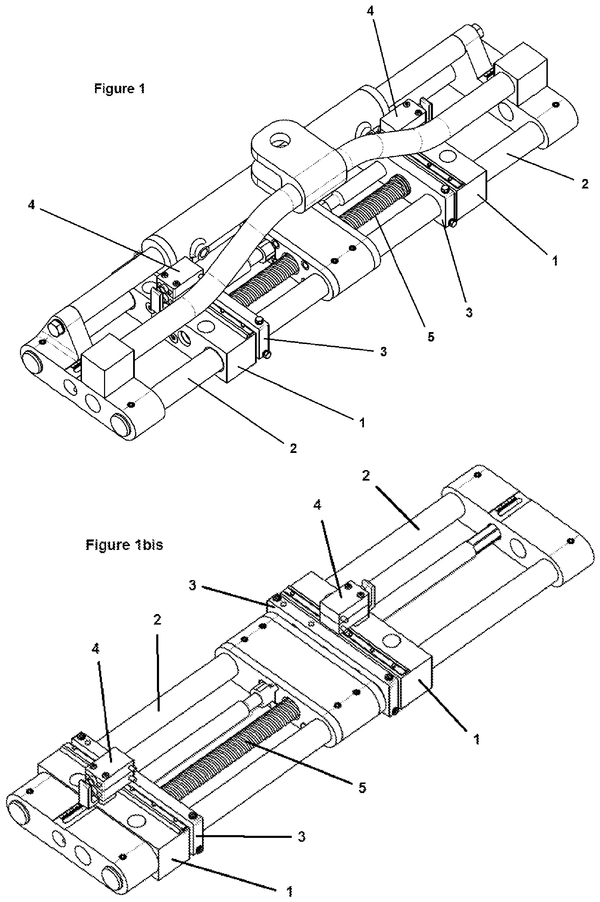

Selon un premier exemple de construction, l'élément de déverrouillage 3, tel qu'il est présenté sur les figures 1, Ibis, 2, 5, 6a à 6d et 7a à 7h, est agencé de façon à être encadré, de part et d'autre de son axe de translation, par des dispositifs de blocage 4.

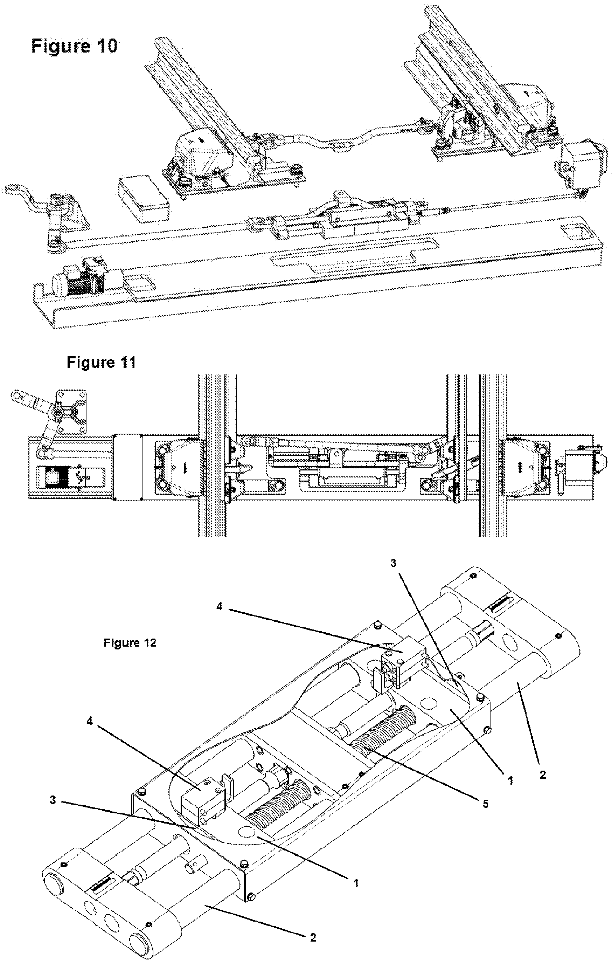

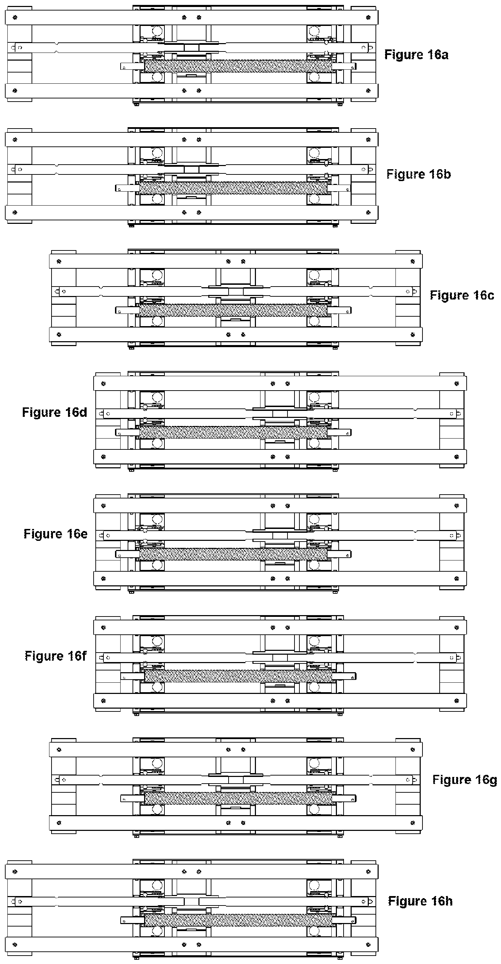

Selon un second exemple de construction, l'élément de déverrouillage 3, tel qu'il est présenté sur les figures 12, 13, 14, 15a à 15d et 16a à 16h, est agencé de façon à encadrer des dispositifs de blocage 4 positionnés à l'intérieur de son cadre. Ces dispositifs de blocage 4 montés fixes réalisent des butées intérieures dans chaque sens de translation de l'élément de déverrouillage 3.

Selon une particularité de construction, le dispositif de blocage 4 est un système de calage à billes. Le système de calage à billes, largement utilisé dans les coupleurs hydrauliques rapides par exemple, a été choisi pour caler le mécanisme.

Ce mécanisme de calage à bille comprend principalement :
- un tube support 4f, immobile, fixé sur l'élément fixe 1,
- des billes 4a placées dans des cavités du tube support 4f prévues à cet effet, et permettant un déplacement radial des billes 4a,
- une structure fixée à l'élément mobile 2 en translation et réalisée par une barre coulissante dans le tube support 4f, par exemple vissée sur l'élément mobile 2 en translation et bloquée en rotation. Cette barre présentant un étranglement formant une gorge 2a au niveau d'un point donné correspondant à une position de fin de course désirée de l'élément mobile 2 par rapport à l'élément fixe 1,
- une bague périphérique 4b, mobile et indépendante, soumise à l'effort d'un ressort 4e en appui sur une surface intérieure de l'élément fixe 1.

La bague périphérique 4b a pour fonction de :
- forcer un mouvement radial des billes 4a vers la gorge de 2a de la structure fixée à l'élément mobile 2, dès que cette gorge 2a est accessible.
- maintenir les billes 4a dans ce logement formé par la gorge 2a de façon à bloquer la structure fixée à l'élément mobile 2 avec l'élément fixe 1.

L'élément mobile 2 peut coulisser librement, jusqu'à ce que la structure, qui y est fixée et formée par une barre, atteigne une position prédéfinie par la gorge 2a. Lorsque la gorge 2a et les billes 4a sont en vis-à-vis, les billes 4a s'engagent automatiquement dans l'espace accessible formé par la gorge 2a sous l'action de la bague 4b et du ressort 4e. Les billes 4a se trouvent alors maintenues par la bague 4b dans la gorge 2a et tout déplacement de l'élément mobile 2 par rapport à l'élément fixe est alors impossible.

L'ajustement de la position de la barre formant la structure fixée à l'élément mobile 2 permet de régler la position de la gorge 2a par rapport à l'élément mobile 2 en translation et de prédéterminer la position de fin de course de l'élément mobile 2 par rapport à l'élément fixe 1.

Le réglage de la position de fin de course correspondant au blocage de l'élément mobile 2 en translation avec l'élément fixe 1 se fait par ajustement, par vissage ou dévissage de la structure montée/fixée à l'élément mobile 2 qui est formée par une barre et qui porte la gorge 2a destinée à interagir avec les billes 4a du dispositif de blocage 4.

Pour décaler ce mécanisme, une action extérieure sur la bague 4b est nécessaire.

La position de la bague 4b peut ainsi servir d'indicateur d'un bon calage du mécanisme.

Selon une particularité de construction, un unique dispositif 5 d'actionnement ou actionneur est utilisé pour assurer le mouvement de deux pièces indépendantes l'une de l'autre.

Toutefois, selon une autre particularité de construction, le mécanisme fait intervenir deux actionneurs, à savoir :
- un actionneur principal réalisé, par exemple, par un vérin hydraulique pour assurer un actionnement du mécanisme en mode automatique,
- un actionneur secondaire réalisé, par exemple, par une vis à bille en parallèle pour assurer un actionnement du mécanisme en cas de panne, de secours ou d'intervention manuelle.

Il convient de noter que, fonctionnellement, un seul actionneur est actif à la fois. Le second actionneur est alors asservit par l' actionneur en fonctionnement.

Afin de simplifier la compréhension du mécanisme de l'invention, un unique dispositif 5 d'actionnement est considéré.

Selon un exemple de construction, le dispositif 5 d'actionnement est ainsi formé, par exemple, par une vis à bille transformant un mouvement rotatif en un mouvement linéaire.

Le dispositif 5 d'actionnement comprend ainsi :
- une partie fixe en translation et en rotation avec l'élément de déverrouillage 3, cette partie est réalisée par un axe fileté 5a,
- une partie mobile 5b réalisée par un écrou à bille qui est fixe en translation avec l'élément mobile 2 en translation.

Ainsi, lorsque le dispositif 5 d'actionnement génère un effort, il entraîne un déplacement de l'élément de déverrouillage 3 dans la direction opposée à la direction de déplacement de l'élément mobile 2 en translation. L'élément de déverrouillage 3 a une course restreinte par rapport à celle de l'élément mobile 2. Cet élément de déverrouillage 3 assure également, d'une part, une liaison butée avec la bague 4b du dispositif de blocage 4 et, d'autre part, une liaison butée avec l'élément fixe en position 1.

La cinématique du fonctionnement du mécanisme de l'invention peut être décomposée comme suit :
1. Le dispositif d'actionnement 5 est à l'arrêt. L'élément mobile 2 est en position calée à gauche.
2. Le dispositif d'actionnement 5 se met en marche. 1^{er} mouvement : décalage de l'élément mobile 2.
3. Le dispositif d'actionnement 5 est en fonctionnement. 2^{ème} mouvement : manœuvre proprement dite.
4. Le dispositif d'actionnement 5 s'arrête. L'élément mobile 2 atteint la position de fin de course.
5. Le dispositif de blocage 4 s'active grâce au ressort 4e de rappel.
6. Le dispositif d'actionnement 5 change de sens. 1^{er} mouvement : décalage de l'élément mobile 2.
7. Le dispositif d'actionnement 5 est en marche. 2^{ème} mouvement : manœuvre proprement dite.
8. Le dispositif d'actionnement 5 s'arrête. L'élément mobile 2 atteint la position de fin de course.

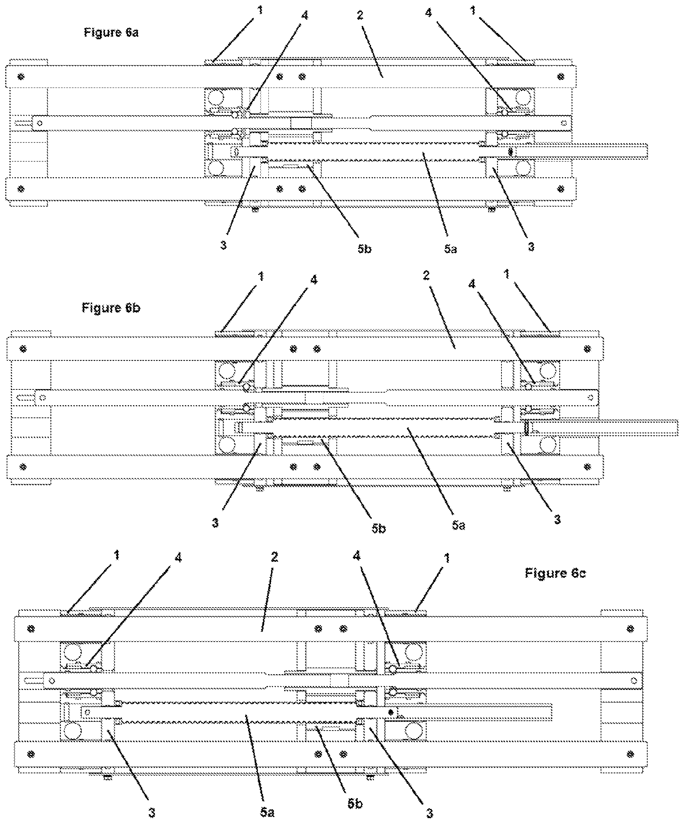

Ainsi, dans le premier exemple de construction illustré par les figures 1, Ibis, 2, 5, 6a à 6d et 7a à 7h, la cinématique suivante est obtenue :
A partir d'une position initiale, illustrée par la figure 6a, dans laquelle les aiguilles de rail sont calées sur la gauche par le mécanisme de l'invention :
- l'élément mobile 2 est dans sa position gauche,
- l'élément de déverrouillage 3 est dans sa position droite,
- le dispositif de blocage 4 gauche est actionné de sorte que :
   o les billes 4a sont dans la gorge 2a de la structure fixée à l'élément mobile 2,
   o La bague 4b est dans une position de maintien des billes dans la gorge 2a.
- le dispositif de blocage 4 de droite n'est pas actionné :
   o la bague 4b est dans une position de compression du ressort 4e sous la butée de l'élément de déverrouillage 3,
   o les billes 4a n'interagissent pas avec la gorge de la structure fixée à l'élément mobile 2.

### 1 ^{er} Mouvement :

Lorsque le dispositif 5 d'actionnement fonctionne pour agencer le mécanisme dans la position arrangée à la figure 6b :
- l'élément de déverrouillage 3 subit un effort vers la gauche,
- l'élément mobile 2 subit un effort vers la droite, qui se trouve bloqué en mouvement par le dispositif de blocage 4 gauche.

Dans ces conditions, il y a un décalage du mécanisme avec un déplacement de l'élément de déverrouillage 3 vers la gauche.

Avec ce déplacement, l'élément de déverrouillage 3 vient en butée contre la bague 4b le dispositif de blocage 4 de gauche et déplace la bague 4b en la repoussant dans l'élément fixe en comprimant le ressort 4e.

Le déplacement de la bague 4b libère les billes 4a de la gorge 2a de sorte que ces dernières ne bloquent plus la structure fixée à l'élément mobile 2.

Le déplacement de l'élément de déverrouillage 3 est arrêté lorsqu'il arrive en butée contre l'élément fixe 1.

### 2^{nd} Mouvement :

Lorsque l'élément de déverrouillage 3 est en butée contre l'élément fixe 1, la poursuite du fonctionnement du dispositif 5 d'actionnement permet le déplacement de l'élément mobile 2 en translation vers la droite, de sorte que le mécanisme soit organisé pour être agencé selon l'arrangement illustré à la figure 6c.

Le dispositif 5 d'actionnement entraine le déplacement de l'élément mobile 2 par rapport à l'élément de déverrouillage 3 maintenu immobile car positionné en butée contre l'élément fixe 1. Le déplacement de l'élément mobile 2 entraine le mouvement des aiguilles associées à l'élément mobile 2.

L'élément mobile 2 se déplace alors jusqu'à une fin de course correspondant à une position opposée à sa position initiale.

### 3^{ème} Mouvement :

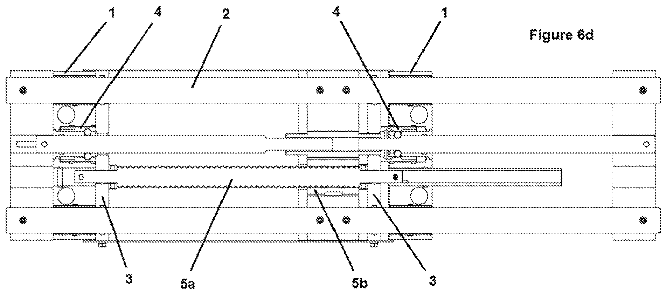

En fin de course, l'élément mobile 2 positionne la gorge 2a portée par la structure fixée à l'élément mobile 2 en regard des billes 4a du dispositif de blocage de droite, de sorte que le mécanisme aboutisse à l'arrangement illustré à la figure 6d.

Une fois la gorge 2a portée par la structure fixée à l'élément mobile 2 en face des billes 4a, celles-ci vont bouger radialement vers la gorge 2a et la bague 4b repousse les billes 4a et les maintient en position dans la gorge 2a sous l'effet du ressort 4e.

L'élément mobile 2 est alors en position verrouillée avec la partie droite de l'élément fixe 1 grâce au dispositif de blocage 4 de droite.

Dans cette position, le mécanisme est stable et résistant aux vibrations. En effet, pour libérer le verrouillage, la bague 4b doit être déplacée avec notamment une compression du ressort 4e. Le ressort 4e peut être dimensionné en conséquence.

Les efforts transmis par la tringlerie de renvoi sont repris par le calage à billes.

Il convient de noter que dans les figures 1, Ibis, 2, 5, 6a à 6d et 7a à 7h proposées à titre d'exemple d'illustration :
- la course à gauche est réglée à sa valeur maximale,
- la course à droite est réglée à sa valeur minimale.

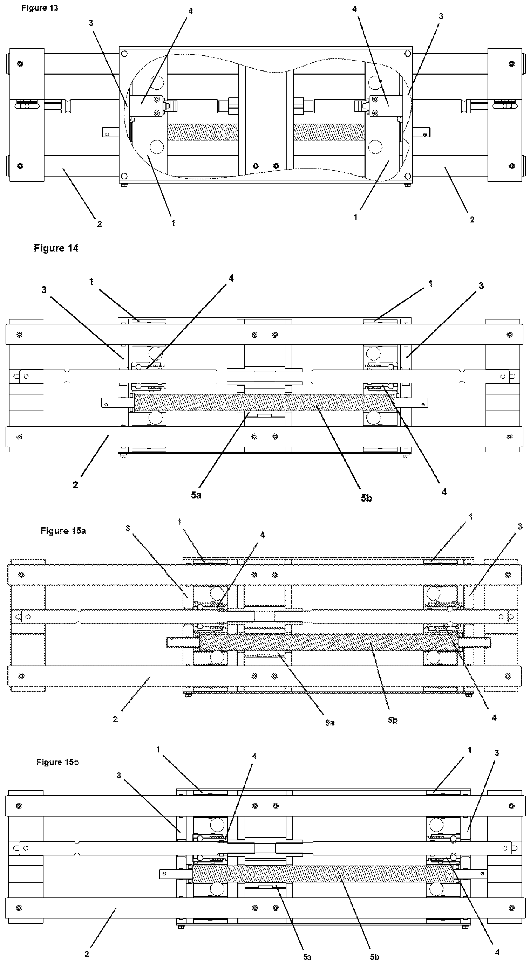

Dans le cadre du second exemple de construction illustré par les figures 12, 13, 14, 15a à 15d et 16a à 16h, la cinématique suivante est obtenue :
A partir d'une position initiale, illustrée par la figure 15a, dans laquelle les aiguilles de rail sont calées sur la gauche par le mécanisme de l'invention :
- l'élément mobile 2 est dans sa position gauche
- l'élément de déverrouillage 3 est dans sa position droite
- le dispositif de blocage 4 de droite est actionné de sorte que :
   o les billes 4a sont dans la gorge 2a de la structure fixée à l'élément mobile 2,
   o La bague 4b est dans une position de maintien des billes dans la gorge 2a.
- le dispositif de blocage 4 gauche n'est pas actionné :
   o la bague 4b est dans une position de compression du ressort 4e sous la butée de l'élément de déverrouillage 3,
   o les billes 4a n'interagissent pas avec la gorge de la structure fixée à l'élément mobile 2.

### 1^{er} Mouvement :

Lorsque le dispositif d'actionnement 5 fonctionne pour agencer le mécanisme dans la position arrangée à la figure 15b :
- l'élément de déverrouillage 3 subit un effort vers la gauche,
- l'élément mobile 2 subit un effort vers la droite, qui se trouve bloqué en mouvement par le dispositif de blocage 4 de droite.

Dans ces conditions, il y a un décalage du mécanisme avec un déplacement de l'élément de déverrouillage 3 vers la gauche.

Avec ce déplacement, l'élément de déverrouillage 3 vient en butée contre la bague 4b du dispositif de blocage 4 de droite et déplace la bague 4b en la repoussant dans l'élément fixe en comprimant le ressort 4e.

Le déplacement de la bague 4b libère les billes 4a de la gorge 2a de sorte que ces dernières ne bloquent plus la structure fixée à l'élément mobile 2.

Le déplacement de l'élément de déverrouillage 3 est arrêté lorsqu'il arrive en butée contre l'élément fixe 1.

### 2^{nd} Mouvement :

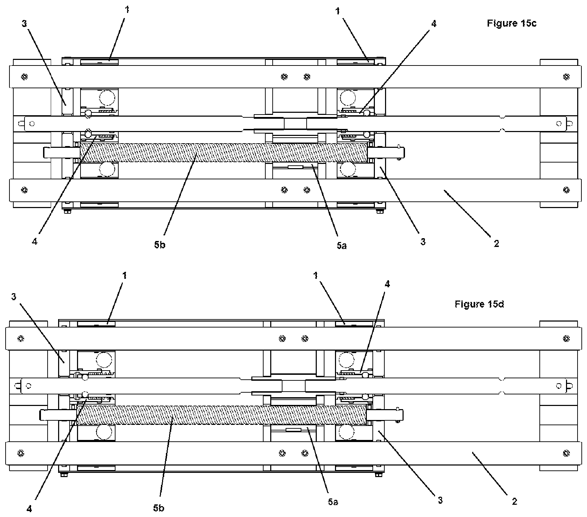

Lorsque l'élément de déverrouillage 3 est en butée contre l'élément fixe 1, la poursuite du fonctionnement du dispositif 5 d'actionnement permet le déplacement de l'élément mobile 2 en translation vers la droite, de sorte que le mécanisme soit organisé pour être agencé selon l'arrangement illustré à la figure 15c.

Le dispositif 5 d'actionnement entraine le déplacement de l'élément mobile 2 par rapport à l'élément de déverrouillage 3 maintenu immobile car positionné en butée contre l'élément fixe 1. Le déplacement de l'élément mobile 2 entraine le mouvement des aiguilles associées à l'élément mobile 2.

L'élément mobile 2 se déplace alors jusqu'à une fin de course correspondant à une position opposée à sa position initiale.

### 3^{ème} Mouvement :

En fin de course, l'élément mobile 2 positionne la gorge 2a portée par la structure fixée à l'élément mobile 2 en regard des billes 4a du dispositif de blocage de gauche, de sorte que le mécanisme aboutisse à l'arrangement illustré à la figure 15d.

Une fois la gorge 2a portée par la structure fixée à l'élément mobile 2 en face des billes 4a, celles-ci vont bouger radialement vers la gorge 2a et la bague 4b repousse les billes 4a et les maintient en position dans la gorge 2a sous l'effet du ressort 4e.

L'élément mobile 2 est alors en position verrouillée avec la partie gauche de l'élément fixe 1 grâce au dispositif de blocage 4 de gauche.

Dans cette position, le mécanisme est stable et résistant aux vibrations. En effet, pour libérer le verrouillage, la bague 4b doit être déplacée avec notamment une compression du ressort 4e. Le ressort 4e peut être dimensionné en conséquence.

Les efforts transmis par la tringlerie de renvoi sont repris par le calage à billes.

Par ailleurs, selon une particularité de construction, l'élément mobile 2 comprend une graduation 6 grâce à laquelle il est possible de déterminer l'amplitude de réglage de la course par simple lecture.

L'invention porte également sur des variantes de construction dans lesquelles les positions relatives de l'élément fixe 1, de l'élément mobile 2 et de l'élément de déverrouillage 3 peuvent être inversées par rapport à celles présentées sur les figures (partie intérieure fixe et partie extérieure mobile).

De même, l'élément fixe 1, l'élément mobile 2 et l'élément de déverrouillage 3 pourraient être agencés de façon concentrique de façon à réaliser un système n'ayant qu'un unique axe de guidage autour duquel l'ensemble des composants est placé radialement.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention défini par les revendictions.

## Revendications

1. Mécanisme de déplacement et de blocage en position d'au moins une aiguille de rail comprenant au moins :
- un élément fixe en position (1) avec au moins une contre-aiguille de rail,
- un élément mobile (2) en translation monté fixe avec au moins une aiguille de rail et apte à translater grâce à un dispositif (5) d'actionnement,
- un dispositif de blocage (4) de l'élément mobile (2) avec l'élément fixe (1) lorsque l'élément mobile (2) est dans une position de fin de course par rapport à l'élément fixe (1), de sorte que l'aiguille de rail de l'élément mobile (2) en translation est en butée contre sa contre-aiguille de rail,
- un élément de déverrouillage (3) du dispositif de blocage (4), cet élément de déverrouillage (3) étant mobile et apte à être déplacé grâce à un dispositif d'actionnement (5) lorsque l'élément mobile (2) est verrouillé immobile avec l'élément fixe (1),
**caractérisé en ce que** le dispositif d'actionnement (5) est arrangé pour actionner alternativement le déplacement en translation de l'élément de déverrouillage (3) et de l'élément mobile (2).

2. Mécanisme de déplacement et de blocage en position d'au moins une aiguille de rail selon la revendication 1, **caractérisé en ce que** l'élément de déverrouillage (3) est apte à être déplacé en translation selon un axe parallèle à l'axe de translation de l'élément mobile (2) en translation.

3. Mécanisme de déplacement et de blocage en position d'au moins une aiguille de rail selon une des revendications précédentes, **caractérisé en ce que** le dispositif (5) d'actionnement est un actionneur de type linéaire.

4. Mécanisme de déplacement et de blocage en position d'au moins une aiguille de rail selon la revendication 3, **caractérisé en ce que** le dispositif (5) d'actionnement comprend au moins :
- un axe fileté (5a) fixe en translation avec un premier des deux éléments que sont l'élément de déverrouillage (3) et de l'élément mobile (2) en translation,
- un écrou taraudé (5b) coopérant avec l'axe fileté (5a) fixe en translation avec un second des deux éléments que sont l'élément de déverrouillage (3) et de l'élément mobile (2) en translation,
- un mécanisme d'entraînement en rotation axiale de l'axe fileté (5a) ou de l'écrou taraudé (5b), la pièce qui n'est pas actionnée par le moyen moteur étant fixe en rotation avec l'élément de déverrouillage (3) ou l'élément mobile (2) en translation qui la porte.

5. Mécanisme de déplacement et de blocage en position d'au moins une aiguille de rail selon une des revendications précédentes, **caractérisé en ce que** le dispositif de blocage (4) de l'élément mobile (2) avec l'élément fixe (1) est monté sur l'élément fixe (1).

6. Mécanisme de déplacement et de blocage selon la revendication précédente, **caractérisé en ce que**, l'élément de déverrouillage (3) interagit avec le dispositif de blocage (4) en étant déplacé en butée contre une surface de l'élément fixe (1).

7. Mécanisme de déplacement et de blocage en position selon une des revendications précédentes, **caractérisé en ce que** :
- l'élément mobile (2) en translation est monté fixe avec deux aiguilles de rail et comprend une position de fin de course pour chaque aiguille par rapport à une contre-aiguille respective associée à au moins un élément fixe (1),
- les contre-aiguilles sont associées à des éléments fixes respectifs ou un élément fixe (1) partagé,
- chaque position de fin de course de l'élément mobile (2) en translation est associée à un dispositif de blocage (4) respectif de l'élément mobile (2) avec un élément fixe (1),
- l'élément de déverrouillage (3) est apte à interagir alternativement avec le dispositif de blocage (4) de chaque position de fin de course de l'élément mobile (2) en translation.

8. Mécanisme de déplacement et de blocage selon une des revendications précédentes, **caractérisé en ce que**, l'élément mobile (2) en translation étant monté coulissant au travers de l'élément fixe (1), le dispositif de blocage (4) est réalisé par un dispositif de calage à billes coopérant avec une gorge (2a) portée par l'élément mobile (2) en translation, le dispositif de calage à billes comprenant :
- au moins une bille (4a) apte à réaliser un déplacement radial par rapport à l'axe de translation de l'élément mobile (2) de façon à coopérer avec au moins une gorge (2a) de l'élément mobile (2),
- une bague (4b) montée mobile en coulissement selon l'axe de translation de l'élément mobile (2) et comportant, d'une part, au moins une rampe (4c) de déplacement d'au moins une bille (4a) vers une gorge (2a) de l'élément mobile (2) en translation et, d'autre part, une interface d'interaction (4d) avec un élément de déverrouillage (3),
- un ressort (4e) de rappel de la bague mobile (4b) s'opposant à l'action d'un élément de déverrouillage (3) pour forcer le positionnement d'au moins une bille (4a) dans la gorge (2a) de l'élément mobile (2).

9. Mécanisme de déplacement et de blocage selon les revendications 5 et 8, **caractérisé en ce que** l'interface d'interaction (4d) de la bague (4b) montée mobile fait saillie par rapport à une surface de l'élément fixe (1).

10. Procédé de fonctionnement d'un mécanisme de déplacement et de blocage selon une des revendications 1 à 9, **caractérisé en ce que** l'élément de déverrouillage (3) et l'élément mobile (2) en translation partageant un même dispositif (5) d'actionnement, le déplacement par le dispositif (5) d'un premier de ces deux éléments (2, 3) est conditionné par l'immobilité du second de ces éléments (2, 3), avec une immobilité soit en position de butée contre l'élément fixe (1) soit en position verrouillée avec l'élément fixe (1) sous l'action du dispositif de blocage (4).

11. Procédé de fonctionnement selon la revendication 10, **caractérisé en ce que** le procédé comprend :
- une étape de déplacement d'une aiguille contre sa contre-aiguille par translation de l'élément mobile (2) en translation selon une première direction, sous l'action du dispositif (5) d'actionnement jusqu'à une position de fin de course,
- une étape de verrouillage de l'élément mobile (2) avec l'élément fixe (1) par le dispositif de blocage (4),
- une étape de déplacement de l'élément de déverrouillage (3) sous l'action du dispositif (5) d'actionnement, l'élément mobile (2) en translation étant fixe avec l'élément fixe (1),
- une étape de butée de l'élément de déverrouillage (3) avec une surface de l'élément mobile (2) fixe conjointement à une étape de déverrouillage de l'élément mobile (2),
- une étape de déplacement d'une aiguille contre sa contre-aiguille par translation de l'élément mobile (2) en translation selon une seconde direction, sous l'action du dispositif (5) d'actionnement, cette seconde direction étant opposée à la première direction, l'élément de déverrouillage (3) restant fixe en butée contre l'élément fixe (1).

## Patentansprüche

1. Mechanismus zur Bewegung und Positionsarretierung mindestens einer Weichenzunge, umfassend mindestens:
- ein positionsmäßig festgelegtes Element (1) mit mindestens einer Backenschiene,
- ein translationsbewegliches Element (2), das mit mindestens einer Weichenzunge fest montiert ist und das in der Lage ist, dank einer Betätigungsvorrichtung (5) zu translatieren,
eine Vorrichtung (4) zum Arretieren des beweglichen Elements (2) mit dem festgelegten Element (1), wenn das bewegliche Element (2) in einer Endposition bezüglich des feststehenden Elements (1) ist, so dass die Weichenzunge des translationsbeweglichen Elements (2) in Anlage an ihrer Backenschiene ist,
- ein Entriegelungselement (3) der Arretierungsvorrichtung (4), wobei dieses Entriegelungselement (3) beweglich und in der Lage ist, dank einer Betätigungsvorrichtung (5) bewegt zu werden, wenn das bewegliche Element (2) unbeweglich mit dem feststehenden Element (1) verriegelt ist,
**dadurch gekennzeichnet, dass** die Betätigungsvorrichtung (5) dazu angeordnet ist, im Wechsel die translatorische Bewegung des Entriegelungselements (3) und des beweglichen Elements (2) zu betätigen.

2. Mechanismus zur Bewegung und Positionsarretierung mindestens einer Weichenzunge nach Anspruch 1, **dadurch gekennzeichnet, dass** das Entriegelungselement (3) in der Lage ist, translatorisch gemäß einer parallel zur Translationsachse des translationsbeweglichen Elements (2) verlaufenden Achse bewegt zu werden.

3. Mechanismus zum Bewegen und Arretieren mindestens einer Weichenzunge nach einem der vorhergehenden Ansprüche, **dadurch gekennzeichnet, dass** die Betätigungsvorrichtung (5) ein Linearaktutor ist.

4. Mechanismus zur Bewegung und Positionsarretierung mindestens einer Weichenzunge nach Anspruch 3, **dadurch gekennzeichnet, dass** die Betätigungsvorrichtung (5) mindestens Folgendes umfasst:
- eine Gewindespindel (5a), translationsfest mit einem ersten der beiden Elemente, bei denen es sich um des Entriegelungselement (3) und das translationsbewegliche Element (2) handelt,
- eine Gewindemutter (5b), die mit der Gewindespindel (5a) zusammenwirkt, translationsfest mit einem zweiten der beiden Elemente, bei denen es sich um des Entriegelungselement (3) und das translationsbewegliche Element (2) handelt,
- einen Mechanismus zum axialen Rotationsantrieb der Gewindespindel (5a) oder der Gewindemutter (5b), wobei das Teil, das nicht von dem Antriebsmittel betätigt wird, mit dem Entriegelungselement (3) oder dem translationsbeweglichen Element (2), das es trägt, drehfest ist.

5. Mechanismus zur Bewegung und Positionsarretierung mindestens einer Weichenzunge nach einem der vorhergehenden Ansprüche, **dadurch gekennzeichnet, dass** die Vorrichtung (4) zur Arretierung des beweglichen Elements (2) mit dem feststehenden Element (1) an dem feststehenden Element (1) montiert ist.

6. Bewegungs- und Positionsarretierungsmechanismus nach dem vorhergehenden Anspruch, **dadurch gekennzeichnet, dass** das Entriegelungselement (3) mit der Arretierungsvorrichtung (4) zusammenwirkt, indem es gegen eine Fläche des feststehenden Elements (1) auf Anschlag gefahren wird.

7. Bewegungs- und Positionsarretierungsmechanismus nach einem der vorhergehenden Ansprüche, **dadurch gekennzeichnet, dass**:
- das translationsbewegliche Element (2) fest mit zwei Weichenzungen montiert ist und eine Endposition für jede Zunge bezüglich einer jeweiligen mindestens einem feststehenden Element (1) zugeordneten Backenschiene umfasst,
- die Backenschienen jeweiligen feststehenden Elementen oder einem gemeinsamen feststehenden Element (1) zugeordnet sind,
- jede Endposition des translationsbeweglichen Elements (2) einer jeweiligen Vorrichtung (4) zur Arretierung des beweglichen Elements (2) mit einem feststehenden Element (1) zugeordnet ist,
- das Entriegelungselement (3) in der Lage ist, im Wechsel mit der Arretierungsvorrichtung (4) jeder Endposition des translationsbeweglichen Elements (2) zusammenzuwirken.

8. Bewegungs- und Positionsarretierungsmechanismus nach einem der vorhergehenden Ansprüche, **dadurch gekennzeichnet, dass**, da das translationsbewegliche Element (2) durch das feststehende Element (1) gleitend montiert ist, die Arretierungsvorrichtung (4) als eine Kugel-Verkeilvorrichtung ausgeführt ist, die mit einer von dem translationsbeweglichen Element (2) getragenen Auskehlung (2a) zusammenwirkt, wobei die Kugel-Verkeilvorrichtung Folgendes umfasst:
- mindestens eine Kugel (4a), die in der Lage ist, eine radiale Bewegung bezüglich der Translationsachse des beweglichn Elements (2) auszuführen, so dass sie mit mindestens einer Auskehlung (2a) des beweglichen Elements (2) zusammenwirkt,
- einen Ring (4b), der gleitbeweglich gemäß der Translationsachse des beweglichen Elements (2) montiert ist und einerseits mindestens eine Rampe (4c) zum Bewegen mindestens einer Kugel (4a) zu einer Auskehlung (2a) des translationsbeweglichen Elements (2) und andererseits eine Schnittstelle (4d) zum Zusammenwirken mit einem Entriegelungselement (3) aufweist,
- eine Rückholfeder (4e) für den beweglichen Ring (4b), die dem Wirken eines Entriegelungselements (3) entgegenwirkt, um die Positionierung mindestens einer Kugel (4a) in die Auskehlung (2a) des beweglichen Elements (2) zu erzwingen.

9. Bewegungs- und Positionsarretierungsmechanismus nach den Ansprüchen 5 und 8, **dadurch gekennzeichnet, dass** die Zusammenwirkungsschnittstelle (4d) des beweglich montierten Rings (4b) von einer Fläche des feststehenden Elements (1) vorsteht.

10. Betriebsverfahren eines Bewegungs- und Positionsarretierungsmechanismus nach einem der Ansprüche 1 bis 9, **dadurch gekennzeichnet, dass**, da das Entriegelungselement (3) und das translationsbewegliche Element (2) eine gemeinsame Betätigungsvorrichtung (5) haben, die Bewegung eines ersten dieser beiden Elemente (2, 3) mittels der Vorrichtung (5) durch die Unbeweglichkeit des zweiten dieser Elemente (2, 3) bedingt ist, und zwar mit einer Unbeweglichkeit entweder in der Anschlagposition gegen das feststehende Element (1) oder in verriegelter Position mit dem feststehenden Element (1) unter der Wirkung der Arretierungsvorrichtung (4) .

11. Betriebsverfahren nach Anspruch 10, **dadurch gekennzeichnet, dass** das Verfahren Folgendes umfasst:
- einen Schritt des Bewegens einer Zunge gegen ihre Backenschiene durch Translation des translationsbeweglichen Elements (2) gemäß einer ersten Richtung unter der Wirkung der Betätigungsvorrichtung (5) bis zu einer Endposition,
- einen Schritt des Verriegelns des beweglichen Elements (2) mit dem feststehenden Element (1) mittels der Arretierungsvorrichtung (4),
- einen Schritt des Bewegens des Entriegelungselements (3) unter der Wirkung der Betätigungsvorrichtung (5), wobei das translationsbewegliche Element (2) mit dem feststehenden Element (1) fest ist,
- einen Schritt des Anlegens des Entriegelungselements (3) an einer Fläche des festen beweglichen Elements (2) gemeinsam mit einem Schritt des Entriegelns des beweglichen Elements (2),
- einen Schritt des Bewegens einer Zunge gegen ihre Backenschiene mittels Translation des translationsbeweglichen Elements (2) gemäß einer zweiten Richtung unter der Wirkung der Betätigungsvorrichtung (5), wobei diese zweite Richtung der ersten Richtung entgegengesetzt ist, wobei das Entriegelungselement (3) in Anlage an dem feststehenden Element (1) bleibt.

## Claims

1. Mechanism for moving and locking in position at least one point switch comprising at least:
- one element (1) fixed in position with at least one stock rail,
- a translationally movable element (2) mounted fixed with at least one point switch and able to translate by virtue of an actuation device (5),
- a locking device (4) locking the movable element (2) with the fixed element (1) when the movable element (2) is in an end-of-travel position with respect to the fixed element (1), such that the point switch of the translationally movable element (2) is in abutment against its stock rail,
- an unlocking element (3) of the locking device (4), this unlocking element (3) being movable and able to be displaced by virtue of an actuation device (5) when the movable element (2) is locked immobile with the fixed element (1),
**characterized in that** the actuation device (5) is arranged to alternately actuate the translational displacement of the unlocking element (3) and of the movable element (2).

2. Mechanism for moving and locking in position at least one point switch according to Claim 1, **characterized in that** the unlocking element (3) is able to be displaced in translation along an axis parallel to the axis of translation of the translationally movable element (2).

3. Mechanism for moving and locking in position at least one point switch according to either of the preceding claims, **characterized in that** the actuation device (5) is an actuator of linear type.

4. Mechanism for moving and locking in position at least one point switch according to Claim 3, **characterized in that** the actuation device (5) comprises at least:
- a threaded shaft (5a) fixed in translation with a first of the two elements that are the unlocking element (3) and the translationally movable element (2),
- a tapped nut (5b) cooperating with the threaded shaft (5a) fixed in translation with a second of the two elements that are the unlocking element (3) and the translationally movable element (2),
- a mechanism driving the threaded shaft (5a) or the tapped nut (5b) in axial rotation, the part which is not actuated by the motor means being fixed in rotation with the unlocking element (3) or the translationally movable element (2) which it bears.

5. Mechanism for moving and locking in position at least one point switch according to one of the preceding claims, **characterized in that** the locking device (4) locking the movable element (2) with the fixed element (1) is mounted on the fixed element (1).

6. Moving and locking mechanism according to the preceding claim, **characterized in that** the unlocking element (3) interacts with the locking device (4) by being moved into abutment against a surface of the fixed element (1).

7. Mechanism for moving and locking in position according to one of the preceding claims, **characterized in that**:
- the translationally movable element (2) is mounted fixed with two point switches and comprises an end-of-travel position for each switch with respect to a respective stock rail associated with at least one fixed element (1),
- the stock rails are associated with respective fixed elements or a shared fixed element (1),
- each end-of-travel position of the translationally movable element (2) is associated with a respective locking device (4) locking the movable element (2) with a fixed element (1),
- the unlocking element (3) is able to interact alternately with the locking device (4) of each end-of-travel position of the translationally movable element (2).

8. Moving and locking mechanism according to one of the preceding claims, **characterized in that**, the translationally movable element (2) being mounted to slide through the fixed element (1), the locking device (4) is produced by a ball chocking device cooperating with a groove (2a) borne by the translationally movable element (2), the ball chocking device comprising:
- at least one ball (4a) able to perform a radial movement with respect to the axis of translation of the movable element (2) so as to cooperate with at least one groove (2a) of the movable element (2),
- a ring (4b) mounted to be slidingly movable along the axis of translation of the movable element (2) and comprising, on the one hand, at least one ramp (4c) for moving at least one ball (4a) towards a groove (2a) of the translationally movable element (2) and, on the other hand, an interaction interface (4d) with an unlocking element (3),
- a return spring (4e) for the movable ring (4b) opposing the action of an unlocking element (3) to force the positioning of at least one ball (4a) in the groove (2a) of the movable element (2) .

9. Moving and locking mechanism according to Claims 5 and 8, **characterized in that** the interaction interface (4d) of the movably mounted ring (4b) protrudes with respect to a surface of the fixed element (1).

10. Method for operating a moving and locking mechanism according to one of Claims 1 to 9, **characterized in that** the unlocking element (3) and the translationally movable element (2) share the same actuation device (5), the movement by the device (5) of a first of these two elements (2, 3) is conditioned by the immobility of the second of these elements (2, 3), with an immobility either in position of abutment against the fixed element (1) or in locked position with the fixed element (1) under the action of the locking device (4).

11. Operating method according to Claim 10, **characterized in that** the method comprises:
- a step of movement of a switch against its stock rail by translation of the translationally movable element (2) in a first direction, under the action of the actuation device (5) to an end-of-travel position,
- a step of locking of the movable element (2) with the fixed element (1) by the locking device (4),
- a step of moving of the unlocking element (3) under the action of the actuation device (5), the translationally movable element (2) being fixed with the fixed element (1),
- a step of abutment of the unlocking element (3) with a surface of the fixed movable element (2) jointly with a step of unlocking of the movable element (2),
- a step of moving of a switch against its stock rail by translation of the translationally movable element (2) in a second direction, under the action of the actuation device (5), this second direction being opposite to the first direction, the unlocking element (3) remaining fixed in abutment against the fixed element (1).
